# EUROPÄISCHE PATENTANMELDUNG

(11) **EP 4 060 770 A1**
(43) Veröffentlichungstag der Anmeldung: **21.09.2022**
(21) Anmeldenummer: 22162390.3
(22) Anmeldetag: 16.03.2022
(51) Int. Cl.: H01M 4/38, H01M 4/505, H01M 4/525, H01M 4/58, H01M 10/0564

(54) **BATTERIEZELLE, ELEKTROLYTMISCHUNG UND VERWENDUNG EINER ELEKTROLYTMISCHUNG**

(30) Priorität: 18.03.2021 DE 102021106626
(71) Anmelder: VOLKSWAGEN AG, 38440 Wolfsburg (DE)
(72) Erfinder: Bolli, Christoph, 38100 Braunschweig (DE); Dagger, Tim, 49811 Lingen (DE); Meister, Paul, 38239 Salzgitter (DE); Qi, Xin, 48151 Münster (DE)
(74) Vertreter: karo IP

(57) **Zusammenfassung**

Es wird eine Batteriezelle umfassend negative Elektrode, positive Elektrode und nicht-wässrige Elektrolytmischung beschrieben. Die positive Elektrode umfasst Lithium-Metalloxide, die negative Elektrode ist ausgewählt aus interkalierbaren Metallen, Metalloxiden, Metallcarboden, Compositen aus interkalierbaren Metallen oder Metalloxiden mit Kohlenstoffen. Die Elektrolytmischung enthält mindestens eine Verbindung (1), ein Lithium-Salz (1) und ein Lithium-Salz (2). Mit der Batteriezelle werden schädliche Nebenreaktionen unterdrückt, die zur Gasbildung führen können. Gleichzeitig erhöht sich der Innenwiderstand nicht. Zudem ist die Leitfähigkeit des Elektrolyten verbessert. Darüber hinaus wird eine entsprechende Elektrolytmischung beschrieben.

## Beschreibung

Die Erfindung betrifft eine Batteriezelle, eine Elektrolytmischung und ihre Verwendung.

Die Batteriezelle umfasst ein gasdicht ausgeführtes Zellengehäuse und darin angeordnet mindestens einen Stapel oder Wickel aufeinander angeordneter Elektrodenfolien. Das Zellengehäuse ist durch ein Folienmaterial gebildet. Das Zellengehäuse weist ein den Stapel oder Wickel umfassendes Gehäuseteil und an zumindest einer Seite der Batteriezelle einen, durch das Verbinden eines ersten Endbereichs des Folienmaterials mit einem zweiten Endbereich des Folienmaterials gebildeten, von dem Gehäuseteil in einer radialen Richtung nach außen abstehenden Randbereich auf.

Eine Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges auf, wobei die elektrische Maschine durch die in der Batteriezelle gespeicherte elektrische Energie antreibbar ist. In einer Batteriezelle sind Elektrodenfolien, also Anoden und Kathoden aufeinander folgend angeordnet, wobei unterschiedliche Elektrodenfolien durch Separatorfolien oder ein Separatormaterial voneinander getrennt angeordnet sind und als Stapel oder Wickel vorliegen können. Die Elektrodenfolien sind in einem Elektrolyt angeordnet. Es sind z. B. Batteriezellen mit flüssigen oder festen Elektrolyten (Feststoffbatterie) bekannt.

Ein Batteriemodul umfasst insbesondere eine Mehrzahl von Batteriezellen, die miteinander elektrisch in Reihe oder parallel geschaltet und in einem Modulgehäuse angeordnet sind. Auch einzelne Batteriemodule können miteinander elektrisch in Reihe oder parallel geschaltet werden. Eine Batterie umfasst ein Batteriemodul oder eine Mehrzahl von Batteriemodulen.

Batteriezellen können als sogenannte Pouchzellen (oder Taschenzellen) ausgeführt sein. Die Pouchzellen umfassen ein Verbundmaterial als Folienmaterial für das Gehäuse. Das Verbundmaterial ist ein Kompositmaterial, insbesondere umfassend Aluminium und Kunststoff. Das Zellengehäuse kann durch mehrere Folienmaterialien gebildet sein, die aufeinander angeordnet werden und einen den Stapel umschließenden Gehäuseteil und einen von dem Gehäuseteil in der radialen Richtung nach außen abstehenden Randbereich ausbilden. Das Zellengehäuse kann auch durch ein einziges Folienmaterial ausgebildet sein, wobei das Zellengehäuse durch ein Falten des Folienmaterials gebildet wird. In diesem Fall ist zumindest an einer Seite des Zellengehäuses kein Randbereich ausgebildet. In den Randbereichen werden die aufeinanderliegenden Folienmaterialien miteinander gasdicht verbunden, insbesondere über eine Siegelnaht.

Bei der Zyklisierung und/oder der Lagerung von Lithium-Ionen-Zellen kommt es zu zyklischer und/oder kalendarischer Alterung, insbesondere bei erhöhten Temperaturen. Dabei kommt es in der Regel auch zu einer Gasentwicklung in der Zelle. Dieses Problem tritt bereits bei aktuell verwendeten Systemen, die in der Regel einen Ni-Anteil von > 50 Gew.-% in der Kathode aufweisen und deren Anode aus Graphit besteht, auf. In zukünftigen Systemen wird der Einsatz von Verbindungen, die mit Lithiumionen Legierungen bilden, wie z.B. Silizium, eine wichtige Rolle spielen, da diese eine höhere Energiedichte und eine bessere Schnellladefähigkeit besitzen. Allerdings haben Zellen mit Si-Anoden oder anderen legierbaren Verbindungen in der Regel eine stärkere Alterung als graphithaltige Lithiumionenzellen. In Zellen mit Si-Anoden kann ebenfalls eine vergleichsweise stärkere Gasentwicklung auftreten. Die durch die Si-haltigen Anoden induzierte geringere Lebensdauer und höhere Gasentwicklung zu verhindern stellt aktuell eine große Herausforderung in der Elektrolytentwicklung dar.

Die Zugabe von Sultonen und/oder cyclischen Sulfaten als Additive zu Elektrolytsystemen für Li-Ionen-Zellen haben sich als Lösungsmöglichkeit erwiesen, um Alterung und Gasentwicklung in Zusammenhang mit Ni-haltigen Kathoden in Li-Ionen-Zellen mit Graphitanoden zu verringern. Beispielsweise wurden cyclische Sulfate als Additive schon in verschiedenen Publikationen (z.B: J. Phys. Chem. C 2014, 118, 51, 29608-29622; Journal of The Electrochemical Society, 162 (12) A2227-A2235 (2015)) in Li-Ionen-Zellen mit Ni-haltigen Kathoden und Graphitanoden verwendet. Der Einsatz der oben genannten Additive führt jedoch oftmals zu einer Erhöhung des Innenwiderstandes der Li-Ionen Zellen.

Zur Verbesserung des Innenwiderstands an den Grenzflächen oder der Leitfähigkeit wurden zusätzliche Li-Salze zum Elektrolyten der Li-Ionen-Zelle zugegeben, wie z.B. Lithiumdifluorophosphat (LiFO) oder Lithiumbis(fluorosufonyl)imid (LiFSI). Auch die Verwendung von Li-Salzen für Li-Ionen-Zellen mit Ni-haltigen Kathoden und Graphitanoden ist in der Fachliteratur bereits dokumentiert (z.B. Journal of The Electrochemical Society, 165 (2) A368-A370 (2018); Journal of The Electrochemical Society, 165 (9) A1718-A1724 (2018); Chem. Mater. 2017, 29, 5, 2254-2263).

Allerdings können weiterhin schädliche Nebenreaktionen auftreten, die zur Gasbildung führen. Zudem kann sich der Innenwiderstand erhöhen.

Aufgabe der vorliegenden Erfindung ist es, die mit Bezug auf den Stand der Technik angeführten Probleme zumindest teilweise zu lösen. Insbesondere sollen schädliche Nebenreaktionen unterdrückt werden, die zur Gasbildung führen können. Gleichzeitig soll der Innenwiderstand nicht erhöht werden. Zudem soll sie die Leitfähigkeit des Elektrolyten verbessern, insbesondere bei tiefen Temperaturen. Darüber hinaus soll die thermische Stabilität erhöht sein.

Zur Lösung dieser Aufgaben trägt eine Batteriezelle mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung ergänzt werden, wobei weitere Ausführungsvarianten der Erfindung aufgezeigt werden. Demgemäß wurde eine Batteriezelle gefunden, die zumindest negative Elektrode, positive Elektrode und nicht-wässrige Elektrolytmischung umfasst.

Die positive Elektrode der erfindungsgemäßen Batteriezelle umfasst Lithium-Metalloxide der Formel (1)

LiₐNi_{1-x-y-z}CoₓMn_{y}Al_{z}O₂ (1)

mit
a = 0,9 bis 1,1,
x = 0 bis 0,5,
y = 0 bis 0,5,
z = 0 bis 0,5,
wobei die Summe x + y + z 0 bis 0,5 ist.

Nicht-wässrig ist dahingehend zu verstehen, dass der Anteil an Wasser in der Elektrolytmischung maximal 1 Gew.-% beträgt, bezogen auf das Gesamtgewicht der Elektrolytmischung. Vorzugsweise beträgt der Wasseranteil 0 bis 0,5 Gew.-%.

Bevorzugt ist x ≠ 0 und y ≠ 0, um beispielsweise die thermische und mechanische Stabilität der Lithium-Metalloxide zu verbessern. Derartige Oxide werden in der Literatur als NCM bezeichnet. Weiterhin bevorzugt ist y ≠ 0 und z ≠ 0. Diese Oxide werden als NCA beschrieben.

Die negative Elektrode ist ausgewählt aus Li-Ionen interkalierbaren Metallen, Metalloxiden, Metallcarbiden, Compositen aus Li-Ionen interkalierbaren Metallen oder Metalloxiden mit Kohlenstoffen, wobei der Anteil an Metall, Metalloxid und Metallcarbid mindestens 10 Gew.-% beträgt, bezogen auf das Gesamtgewicht der negativen Elektrode. Geeignete Li-Ionen interkalierbare Metalle sind Silicium, Zinn oder Antimon, wobei Silicium aufgrund seiner hohen gravimetrischen und volumetrischen Energiedichte besonders bevorzugt ist. Geeigneter Kohlenstoff kann ausgewählt werden aus Graphit, Soft Carbon, Hard Carbon, Nanofibres, Graphen, amorphem Kohlenstoff und Nanoröhrchen.

Die Batteriezelle umfasst meist ein gasdicht ausgeführtes Zellengehäuse und darin angeordnet mindestens einen Stapel oder Wickel aufeinander angeordneter Elektrodenfolien.

Die Elektrolytmischung enthält mindestens eine Verbindung (1), ausgewählt aus der Gruppe bestehend aus den Verbindungen (1a), (1b), (1c), (1d) und ihren Mischungen:

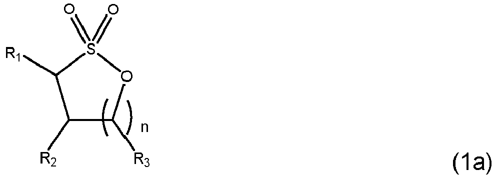

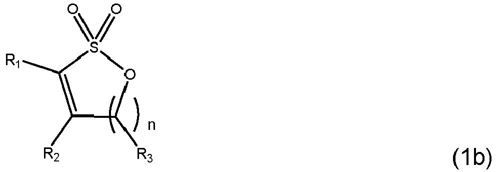

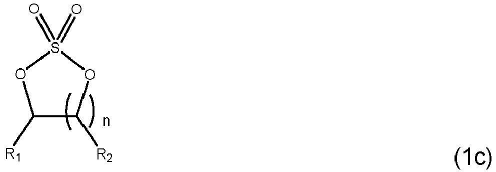

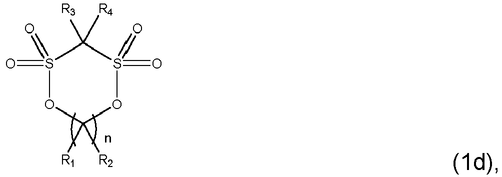

R₁, R₂, R₃, R₄ werden jeweils unabhängig voneinander ausgewählt aus H, F, linearen oder verzweigten, gesättigten oder ungesättigten Kohlenwasserstoffresten mit 1 bis 12 Kohlenstoffatomen, vorzugsweise 1 bis 3 Kohlenstoffatomen. Bevorzugt sind Verbindungen, deren Reste R₁ bis R₄ gleich H sind auf Grund ihrer guten Löslichkeit in Lösemitteln der Elektrolytmischung. Der Index n bedeutet ganzzahlige Werte von 1 bis 10. Bevorzugt sind Verbindungen mit n = 1 oder n = 2, welche gegenüber höheren Werten eine erhöhte chemische Stabilität aufweisen.

In einer besonders bevorzugten Ausführungsform der Erfindung sind R₁, R₂, R₃, R₄ gleich H und n =1 oder n = 2. 1,3-Propansulton (PS), 1,4-Butansulton (BS), 1,3,2-Dioxathiolan-2,2-dioxid (DTD), 1,3,2-Dioxathian-2,2-dioxid und Methylenmethandisulfonat (MMDS) bilden dabei auf Grund ihrer vergleichsweise geringen Toxizität besonders bevorzugte Verbindungen (1).

Die Verbindungen (1a), (1c) und (1d) sind bevorzugt, wobei (1c) und (1d) besonders bevorzugt und (1c) ganz besonders bevorzugt sind. Idealerweise sind R₁, R₂, R₃, R₄ gleich H und n =1 oder n = 2.

Der Anteil an Verbindung (1) beträgt vorzugsweise 0,001 bis 5 Gew.-%, bezogen auf das Gesamtgewicht der Elektrolytmischung. Besonders bevorzugt sind 0,001 bis 4 Gew.-%, ganz besonders bevorzugt 0,001 bis 1 Gew.-%.

Weiterhin enthält die Elektrolytmischung mindestens ein Lithium-Salz (1), ausgewählt aus Lithium-2-trifluoromethyl-4,5-dicyanoimidazol (LiTDI), Lithiumdifluoro-bis(oxalato)phosphat (LiDFOP), Lithiumdifluorophosphat (LiDFP), Lithiummonofluorphosphat (LiMFOP), Lithiumbis(oxalato)borat (LiBOB), Lithiumdifluoro(o-xalato)borat (LiDFOB),Lithiumtetrafluoro(oxalato)phosphat (LiTFOP), Lithiumtriflat (LiOTf), Lithiumtris(oxalato)phosphate (LiTOP), Lithium-4,5-dicyano-2-pentafluoroethylimidazolid (LiPDI), Lithium-2,4,5-tricyanoimidazolid (LiCDI), Lithium-5,6-dicyano-2-trifluoromethylbenzimidazolid (LiTDB56), Lithium-5,6-dicyano-2-pentafluoroethylbenzimidazolid (LiPDB56), Lithium-2,5,6-tricyanobenzimidazolid (LiCDB56), Lithium-4,7-dicyano-2-trifluoromethylbenzimidazolid (LiTDB47), Lithium-4,7-dicyano-2-pentafluoroethylbenzimidazolid (LiPDB47), Lithium-2,4,7-tricyanobenzimidazolid (LiCDB47), Lithium-4,5,6,7-tetracyano-2-trifluoromethylbenzimidazolid (LiTTB), Lithium-4,5,6,7-tetracyano-2-pentafluoroethylbenzimidazolid (LiPTB), Lithium 2,4,5,6,7-pentacyano-benzimidazolid (LiCTB) und seinen Mischungen.

Bevorzugte Lithium-Salze (1) sind in der Lage, Eigenschaften der Grenzflächen zwischen Elektrolyt und Anode und/oder Kathode wie z.B. den elektrischen Widerstand oder die Stabilität bei höheren Temperaturen zu verbessern. Sie werden ausgewählt aus Lithium-2-trifluoromethyl-4,5-dicyanoimidazol (LiTDI), Lithiumdifluorobis(oxalato)phosphat (LiDFOP), Lithiumdifluorophosphat (LiDFP), Lithiummonofluorphosphat (LiMFOP), Lithiumbis(oxalato)borat (LiBOB), Lithiumdifluoro(oxalato)borat (LiDFOB),Lithiumtetrafluoro(oxalato)phosphat (LiTFOP) und ihren Mischungen, wobei Lithiumdifluorobis(oxalato)phosphat (LiDFOP), Lithiumdifluorophosphat (LiDFP), Lithiummonofluorphosphat (LiMFOP), Lithiumdifluoro(oxalato)borat (LiDFOB) und ihre Mischungen besonders bevorzugt sind. Ein ganz besonders bevorzugtes Lithiumsalz (1) ist Lithiumdifluorophosphat (LiDFP), da es auch in geringeren Mengen und Konzentrationen die gewünschten Eigenschaften verbessert.

Das Salz (1) sorgt als Additiv insbesondere für die Absenkung des Innenwiderstands.

Der Anteil an Salz (1) beträgt vorzugsweise 0,001 bis 5 Gew.-%, bezogen auf das Gesamtgewicht der Elektrolytmischung. Besonders bevorzugt sind 0,001 bis 4 Gew.-%, ganz besonders bevorzugt 0,001 bis 3 Gew.-%, um die Viskosität der Elektrolytmischung möglichst wenig zu beeinflussen.

Des Weiteren ist mindestens ein Lithium-Salz (2) enthalten. Dieses ist ausgewählt aus Lithiumbis(fluorosufonyl)imid (LiFSI), Lithiumbis(trifluoromethansulfonyl)imid (LiTFSI), Lithiumtetrafluorborat (LiBF₄), Lithiumhexafluorophosphat (LiPF₆), Lithiumpentafluoroethyltrifluoroborat (LiFAB) und seinen Mischungen.

Hierbei sind Lithiumbis(fluorosufonyl)imid (LiFSI), Lithiumbis(trifluoromethansulfonyl)imid (LiTFSI), Lithiumtetrafluorborat (LiBF₄) und seine Mischungen bevorzugt, da insbesondere sie in der Lage sind, die Eigenschaften der Ionen wie dessen Leitfähigkeit oder thermische Stabilität zu verbessern. Lithiumbis(fluorosufonyl)imid (LiFSI) ist ein besonders bevorzugtes Lithium-Salz (2).

Das Lithium-Salz (2) sorgt für eine erhöhte thermische Stabilität, eine erhöhte Leitfähigkeit und einen reduzierten Innenwiderstand.

Der Konzentration an Salz (2) beträgt vorzugsweise 0,001 bis 0,7 mol/L, um eine hohe Verbesserung der thermischen Stabilität zu erreichen, bevorzugt 0,001 bis 0,6 mol/L und besonders bevorzugt 0,001 bis 0,4 mol/L für eine gute Kombination aus verbesserter thermischer Stabilität und hoher elektrischer Leitfähigkeit. Die Konzentrationsangabe bezieht sich auf die Konzentration an Lithium-Ionen aus dem Salz (2) in der Elektrolytmischung. Weiterhin kann der Anteil an Salz (2) in der Elektrolytmischung 0,001 bis 2 Gew.-%, vorzugsweise 0,001 bis 1 Gew.-%, betragen.

Die Salze (1) und (2) können beispielsweise in einem Massenverhältnis von 1:3 bis 5:1 eingesetzt werden.

Weiterhin enthält die Elektrolytmischung Lithiumhexafluorophosphat (LiPF₆). Es wird häufig als Leitsalz bezeichnet. Die Konzentration an Lithiumhexafluorophosphat beträgt vorzugsweise maximal 2,0 mol/L, bevorzugt maximal 1,4 mol/L und besonders bevorzugt zwischen 1,0 mol/L und 1,4 mol/L. Besonders bevorzugt beträgt die Konzentration an Lithiumhexafluorophosphat und Lithium-Salz (2) zusammen maximal 2,0 mol/L, vorzugsweise maximal 1,4 mol/L und ganz besonders bevorzugt zwischen 1,0 mol/L und 1,4 mol/L. Die Konzentrationsangabe bezieht sich auf die Konzentration an Lithium-Ionen aus LiPF₆ bzw. LiPF₆ und Lithium-Salz (2) in der Elektrolytmischung.

Übliche Batteriezellen umfassen neben negativer Elektrode, positiver Elektrode und Elektrolytmischung weiterhin einen Separator und einen Stromableiter.

Die negative Elektrode der Batteriezelle bildet den Minuspol. Beim Entladen fungiert sie als Anode, beim Laden als Kathode. Die positive Elektrode ist der Pluspol. Beim Entladen ist sie die Kathode, beim Laden die Anode.

Die Elektrolytmischung umfasst neben den Salzen (1) und (2) sowie Lithiumhexafluorophosphat meist wasserfreie, aprotische Lösungsmittel. Geeignete Lösungsmittel sind Kohlensäureester wie Fluoroethylencarbonat, Ethylencarbonat, Propylencarbonat, Dimethylcarbonat, Ethylmethylcarbonat oder Diethylcarbonat. Weiterhin sind 1,2-Dimethoxyethan, Methylacetat, Ethylacetat, Ethylpropionat, Propylpropionat, gamma-Butyrolacton und Acetonitril geeignet. Üblicherweise werden Mischungen der zuvor genannte Lösemittel eingesetzt, wobei Mischungen aus mindestens einem cyclischen und einem linearen Lösemittel bevorzugt sind.

Als Separatormaterial können Polyolefin-Membranen dienen. Geeignete Polyolefine sind beispielsweise Polyethylen (PE) oder Polypropylen (PP). Sie können als Monolayer vorliegen oder bspw. als Trilayer PE/PP/PE bzw. PP/PE/PP. Hergestellt werden können sie im wet-type- oder dry-type-Verfahren. Darüber hinaus können die Polyolefin-Membranen mit nanokeramischer Schicht oder aluminiumhaltige Materialien wie High purity alumina (PA) beschichtet sein.

Als Stromableiter wird für den Minuspol meist Kupfer, beispielsweise in Form einer Kupferfolie, eingesetzt. Am Pluspol wird häufig Aluminium herangezogen, meist als Aluminiumfolie.

Ein weiterer Gegenstand der Erfindung ist eine Elektrolytmischung, welche mindestens eine zuvor definierte Verbindung (1), ein zuvor definiertes Lithium-Salz (1), ein zuvor definiertes Lithium-Salz (2) sowie Lithiumhexafluorophosphat (LiPF₆) enthält. Das Lithium-Salz (2) und das LiPF₆ werden in einem molaren Verhältnis von 0,05:99,95 bis 8,5:81,5, vorzugsweise 0,1:99,9 bis 6:94, eingesetzt.

Ein weiterer Gegenstand der Erfindung ist die Verwendung der erfindungsgemäßen Elektrolytmischung in einer Batteriezelle. Die Batteriezelle umfasst üblicherweise eine negative Elektrode und eine positive Elektrode. Bevorzugt wird die erfindungsgemäße Elektrolytmischung in der erfindungsgemäßen Batteriezelle verwendet. Zur weiteren Charakterisierung der Verwendung kann auf die vorstehenden Erläuterungen zu der Elektrolytmischung bzw. der Batteriezelle vollumfänglich zurückgegriffen werden.

Mit der hier aufgezeigten Lösung wurden die mit Bezug auf den Stand der Technik angeführten Probleme zumindest teilweise gelöst. Insbesondere können nun schädliche Nebenreaktionen unterdrückt werden, die zur Gasbildung führen können. Gleichzeitig wurde der Innenwiderstand nicht erhöht. Zudem wurde die Leitfähigkeit des Elektrolyten verbessert, insbesondere bei tiefen Temperaturen. Darüber kann nun auch die thermische Stabilität erhöht werden.

## Patentansprüche

1. Batteriezelle umfassend negative Elektrode, positive Elektrode und nicht-wässrige Elektrolytmischung, **dadurch gekennzeichnet, dass**
die positive Elektrode Lithium-Metalloxide der Formel (1) umfasst
LiₐNi_{1-x-y-z}CoₓMn_{y}Al_{z}O₂ (1)
mit
a = 0,9 bis 1,1,
x = 0 bis 0,5,
y = 0 bis 0,5,
z = 0 bis 0,5,
wobei die Summe x + y + z 0 bis 0,5 ist,
die negative Elektrode ausgewählt ist aus Li-Ionen interkalierbaren Metallen, Metalloxiden, Metallcarboden, Compositen aus Li-Ionen interkalierbaren Metallen oder Metalloxiden mit Kohlenstoffen, wobei der Anteil an Metall, Metalloxid und Metallcarbid mindestens 10 Gew.-%, bezogen auf das Gesamtgewicht der negativen Elektrode,
die Elektrolytmischung enthält
a. mindestens eine Verbindung (1), ausgewählt aus der Gruppe bestehend aus den Verbindungen (1a), (1b), (1c), (1d) und ihren Mischungen 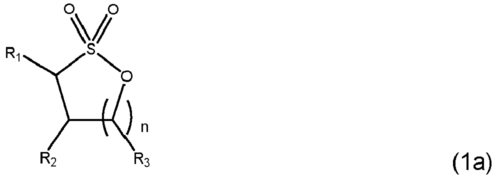 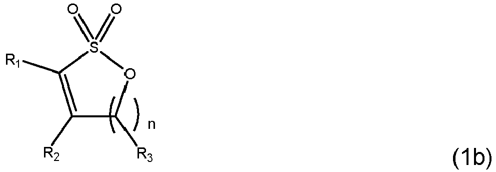 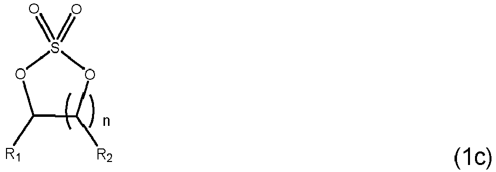 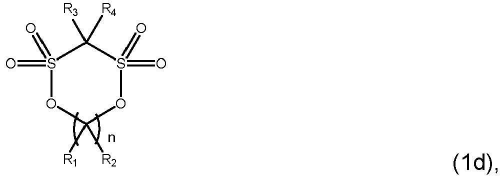 wobei
R₁, R₂, R₃, R₄ jeweils unabhängig voneinander ausgewählt werden aus H, F, linearen oder verzweigten, gesättigten oder ungesättigten Kohlenwasserstoffresten mit 1 bis 12 Kohlenstoffatomen, und n = 1 bis 10 bedeuten,
b. mindestens ein Lithium-Salz (1), ausgewählt aus Lithium-2-trifluoromethyl-4,5-dicyanoimidazol (LiTDI), Lithiumdifluorobis(o-xalato)phosphat (LiDFOP), Lithiumdifluorophosphat (LiDFP), Lithiummonofluorphosphat (LiMFOP), Lithiumbis(oxalato)borat (LiBOB), Lithiumdifluoro(oxalato)borat (LiDFOB),Lithiumtetrafluoro(o-xalato)phosphat (LiTFOP), Lithiumtriflat (LiOTf), Lithiumtris(o-xalato)phosphate (LiTOP), Lithium-4,5-dicyano-2-pentafluoroethylimidazolid (LiPDI), Lithium-2,4,5-tricyanoimidazolid (LiCDI), Lithium-5,6-dicyano-2-trifluoromethylbenzimidazolid (LiTDB56), Lithium-5,6-dicyano-2-pentafluoroethylbenzimidazolid (LiPDB56), Lithium-2,5,6-tricyanobenzimidazolid (LiCDB56), Lithium-4,7-dicyano-2-trifluoromethylbenzimidazolid (LiTDB47), Lithium-4,7-dicyano-2-pentafluoroethylbenzimidazolid (LiPDB47), Lithium-2,4,7-tricyanobenzimidazolid (LiCDB47), Lithium-4,5,6,7-tetracyano-2-trifluoromethylbenzimidazolid (LiTTB), Lithium-4,5,6,7-tetracyano-2-pentafluoroethylbenzimidazolid (LiPTB), Lithium 2,4,5,6,7-pentacyano-benzimidazolid (LiCTB) und seinen Mischungen,
c. mindestens ein Lithium-Salz (2), ausgewählt aus Lithiumbis(fluorosufonyl)imid (LiFSI), Lithiumbis(trifluoromethansulfonyl)imid (LiTFSI), Lithium(fluorosulfonyl)-(nonafluorobutanesulfonyl)imid (LiFNFSI), Lithiumtetrafluorborat (LiBF₄), Lithiumpentafluoroethyltrifluoroborat (LiFAB) und seinen Mischungen, und
d. Lithiumhexafluorophosphat (LiPF₆).

2. Batteriezelle nach Anspruch 1, **dadurch gekennzeichnet, dass** n = 1 oder n = 2.

3. Batteriezelle nach einem der vorherigen Ansprüche, **dadurch gekennzeichnet, dass** R₁ bis R₄ = H.

4. Batteriezelle nach einem der vorherigen Ansprüche, **dadurch gekennzeichnet, dass** x ≠ 0 und y ≠ 0 oder y ≠ 0 und z ≠ 0.

5. Batteriezelle nach einem der vorherigen Ansprüche, **dadurch gekennzeichnet, dass** der Anteil an Verbindung (1) 0,001 bis 5 Gew.-% beträgt, bezogen auf das Gesamtgewicht der Elektrolytmischung.

6. Batteriezelle nach einem der vorherigen Ansprüche, **dadurch gekennzeichnet, dass** der Anteil an Lithium-Salz (1) 0,001 bis 5 Gew.-% beträgt, bezogen auf das Gesamtgewicht der Elektrolytmischung.

7. Batteriezelle nach einem der vorherigen Ansprüche, **dadurch gekennzeichnet, dass** die Konzentration an Lithium-Salz (2) in der Elektrolytmischung 0,001 bis 0,7 mol/L, vorzugsweise 0,001 bis 0,6 mol/L und bevorzugt 0,01 bis 0,4 mol/L, in der Elektrolytmischung beträgt mit der Maßgabe, dass die Konzentration aus Lithium-Salz (2) und Lithiumhexafluorophosphat (LiPF₆) zusammen maximal 2 mol/L, vorzugsweise maximal 1,4 mol/L, beträgt.

8. Nicht-wässrige Elektrolytmischung, umfassend
a. mindestens eine Verbindung (1), ausgewählt aus der Gruppe bestehend aus den Verbindungen (1a), (1b), (1c), (1d) und ihren Mischungen 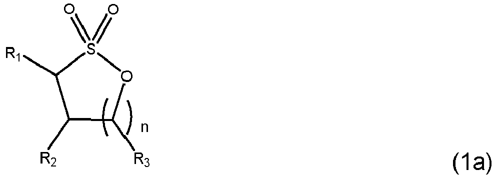 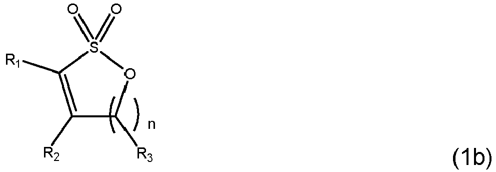 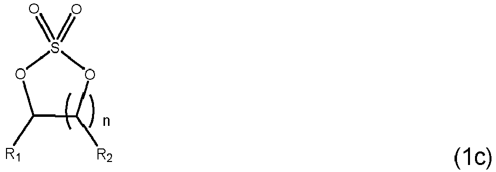 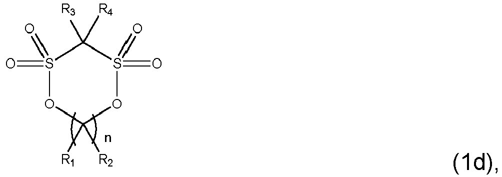 wobei
R₁, R₂, R₃, R₄ jeweils unabhängig voneinander ausgewählt werden aus H, F, linearen oder verzweigten, gesättigten oder ungesättigten Kohlenwasserstoffresten mit 1 bis 12 Kohlenstoffatomen, und n = 1 bis 10 bedeuten,
b. mindestens ein Lithium-Salz (1), ausgewählt aus Lithium-2-trifluoromethyl-4,5-dicyanoimidazol (LiTDI), Lithiumdifluorobis(o-xalato)phosphat (LiDFOP), Lithiumdifluorophosphat (LiDFP), Lithiummonofluorphosphat (LiMFOP), Lithiumbis(oxalato)borat (LiBOB), Lithiumdifluoro(oxalato)borat (LiDFOB),Lithiumtetrafluoro(o-xalato)phosphat (LiTFOP), Lithiumtriflat (LiOTf), Lithiumtris(o-xalato)phosphate (LiTOP), Lithium-4,5-dicyano-2-pentafluoroethylimidazolid (LiPDI), Lithium-2,4,5-tricyanoimidazolid (LiCDI), Lithium-5,6-dicyano-2-trifluoromethylbenzimidazolid (LiTDB56), Lithium-5,6-dicyano-2-pentafluoroethylbenzimidazolid (LiPDB56), Lithium-2,5,6-tricyanobenzimidazolid (LiCDB56), Lithium-4,7-dicyano-2-trifluoromethylbenzimidazolid (LiTDB47), Lithium-4,7-dicyano-2-pentafluoroethylbenzimidazolid (LiPDB47), Lithium-2,4,7-tricyanobenzimidazolid (LiCDB47), Lithium-4,5,6,7-tetracyano-2-trifluoromethylbenzimidazolid (LiTTB), Lithium-4,5,6,7-tetracyano-2-pentafluoroethylbenzimidazolid (LiPTB), Lithium 2,4,5,6,7-pentacyano-benzimidazolid (LiCTB) und seinen Mischungen,
c. mindestens ein Lithium-Salz (2), ausgewählt aus Lithiumbis(fluorosufonyl)imid (LiFSI), Lithiumbis(trifluoromethansulfonyl)imid (LiTFSI), Lithium(fluorosulfonyl)-(nonafluorobutanesulfonyl)imid (LiFNFSI), Lithiumtetrafluorborat (LiBF₄), Lithiumpentafluoroethyltrifluoroborat (LiFAB) und seinen Mischungen, und
d. Lithiumhexafluorophosphat (LiPF₆),
wobei das Lithium-Salz (2) und LiPF₆ in einem molaren Verhältnis von 0,05:99,95 bis 8,5:81,5 eingesetzt werden.

9. Elektrolytmischung nach Anspruch 8, **dadurch gekennzeichnet, dass** das molare Verhältnis von das Lithium-Salz (2) zu LiPF₆ 0,1:99,9 bis 6:94 beträgt.

10. Verwendung einer Elektrolytmischung nach einem der Ansprüche 8 oder 9 in Batteriezellen.
